Europäisches Patentamt

European Patent Office

Office européen des brevets

(19)

(11) **EP 0 859 493 A2**

(12) **EUROPÄISCHE PATENTANMELDUNG**

(43) Veröffentlichungstag:
**19.08.1998 Patentblatt 1998/34**

(51) Int. Cl.$^6$: **H04L 25/02**

(21) Anmeldenummer: **98100518.4**

(22) Anmeldetag: **14.01.1998**

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: **18.02.1997 DE 19706300**

(71) Anmelder:
**Bayerische Motoren Werke Aktiengesellschaft
80788 München (DE)**

(72) Erfinder: **Thiel, Christian, Dr.
83098 Brannenburg (DE)**

(54) **Verfahren zur Übertragung von digitalisierten Analogsignalen auf einen Datenbus**

(57) Bei einem Verfahren zur Übertragung von digitalisierten Analogsignalen, insbesondere von Audiosignalen in Kraftfahrzeugen, auf einen Datenbus, wobei der Abtasttakt beim Digitalisiervorgang des Analogsignals entkoppelt vom Übertragungstakt des Datenbusses ist, werden die nach einer Abtastung erhaltenen digitalen Abtastwerte (Samples) des Analogsignals in Form von Datenworten nacheinander über einen Zwischenspeicher nach dem asynchronen FIFO-Prinzip auf den Datenbus ausgegeben. Dabei werden der Einlesetakt des Zwischenspeichers dem Abtasttakt des Digitalisiervorgangs und der Auslesetakt des Zwischenspeichers dem Übertragungstakt des Datenbusses angepaßt.

EP 0 859 493 A2

Printed by Xerox (UK) Business Services
2.16.3/3.4

## Beschreibung

Die Erfindung betrifft ein Verfahren zur Übertragung von digitalisierten Analogsignalen auf einen Datenbus nach dem Oberbegriff des Patentanspruchs 1.

Die digitale Darstellung von Analogsignalen erfolgt bekanntermaßen durch Abtastung des Analogsignals mit einer vorgegebenen Abtastrate bzw. mit einem vorgegebenen Abtasttakt und durch Analog-/Digitalwandlung der Abtastwerte mit einer vorgegebenen Auflösung. Im folgenden wird unter Abtasttakt die Periodendauer verstanden, die sich aus der auf eine vorgegebene Frequenz bezogenen Abtastrate ergibt.

Insbesondere in Kraftfahrzeugen sind zur Digitalisierung von Analogsignalen in Form von Audiosignalen unterschiedliche Abtasttakte bzw. Abtastraten üblich. Der üblichste Wert bezüglich der Abtastraten ist 44,1 kHz. Weiterhin sind jedoch auch 38 kHz und 48 kHz gebräuchlich. Grundsätzlich erfolgt die Übertragung auf dem Datenbus mit einem Bus-Übertragungstakt, der sinnvollerweise der üblichsten Abtastrate (44,1 kHz) entspricht. Soll das digitalisierte Analogsignal auf einen Datenbus übertragen werden, ergeben sich daraus folgende zwei Probleme: Zum einen muß das Analogsignal, das mit einem dem Bus-Übertragungstakt gleichen Abtasttakt digitalisiert wird, auf den Bus-Übertragungstakt synchronisiert werden. Zum anderen müssen Analogsignale mit anderen Abtasttakten bzw. Abtastraten zunächst einer Abtastratenwandlung unterzogen und anschließend synchronisiert werden. Hierfür sind bereits spezielle Bausteine bekannt, die digitalisierte Analogsignale, wie beispielsweise digitalisierte Audiosignale, nochmals analog wandeln und anschließend synchron zum Bus-Übertragungstakt erneut digital wandeln. Es sind auch andere Bausteine bekannt, die digital über Interpolation zwischen zwei Abtastwerten einen synchronen Abtastwert berechnen.

Derartige Bausteine zur Abtastratenwandlung und Synchronisation sind jedoch aufwendig und kostenintensiv.

Es ist daher Aufgabe der Erfindung, ein vereinfachtes und kostengünstigeres Verfahren zur Übertragung von digitalisierten Analogsignalen auf einen Datenbus zu schaffen.

Diese Aufgabe wird durch die kennzeichnenden Merkmale des Patentanspruchs 1 gelöst.

Die Erfindung geht davon aus, daß sich der Abtasttakt bei einer Digitalisierung von über einen Datenbus zu übertragenden Analogsignalen vom Datenbus-Übertragungstakt nur wenig unterscheidet. Weichen der Abtasttakt und der Übertragungstakt maximal um etwa 25% voneinander ab, treten durch das erfindungsgemäße Verfahren nur geringfügige Fehler in Form einer noch unerheblichen Überlagerung der Nutzsignalfrequenzen (bezogen auf das ursprüngliche Analogsignal) mit Störfrequenzen auf.

Vorzugsweise ist der Empfänger des über den Datenbus übertragenen digitalisierten Analogsignals fehlertolerant; d.h. die durch das erfindungsgemäße Verfahren dem Nutzsignal überlagerten Störfrequenzen werden im Empfänger weitgehend unterdrückt. Dies wird beispielsweise durch die Filterwirkung bei einer Digital-/ Analogwandlung im Empfänger erreicht.

Im speziellen Anwendungsfall (Audiosignale in Kraftfahrzeugen als Analogsignale) treten durch das erfindungsgemäße Verfahren entweder keine oder nur so geringe Fehler auf, daß sie nach einer Digital-/Analogwandlung der über den Datenbus übertragenen Audiosignale durch einen (ersten) Empfänger vom menschlichen Ohr als (letzter) Empfänger durch dessen integrierendes Verhalten (zusätzliche Filterwirkung) nicht wahrgenommen werden.

Das erfindungsgemäß angewendete FIFO-Prinzip ist entsprechend bekannter FIFO-Speicher eine besondere Form eines Schieberegisterverfahrens, das jedoch nicht Bit- sondern Datenwort-orientiert arbeitet. Die Datenworte erscheinen am Ausgang in derselben Reihenfolge, wie sie am Eingang eingegeben werden. Das zuerst eingelesene Wort (first in) wird auch wieder zuerst ausgelesen (first out). Bei einem FIFO-Verfahren kann dieser Vorgang im Unterschied zu einem Schieberegister asynchron erfolgen, d. h. der Auslesetakt ist unabhängig vom Einlesetakt. Dieses asynchrone und datenwortorientierte FIFO-Prinzip wird beim erfindungsgemäßen Verfahren zur Kopplung der asynchronen Takte, nämlich des Abtasttakts beim Digitalisiervorgang des Analogsignals und des Übertragungstakts des Datenbusses, angewendet.

Die Gegenstände der Unteransprüche sind vorteilhafte Weiterbildungen der Erfindung.

Unteranspruch 2 berücksichtigt den Fall, daß die Periodendauer des Abtasttaktes länger als die des Übertragungstaktes ist. Durch das erneute Ausgeben des zuletzt ausgegebenen Datenwortes bei ausgelesenem Zwischenspeicher, bis ein neues Datenwort in den Zwischenspeicher eingelesen wird, werden schwerwiegendere Fehler im übertragenen Signal vermieden.

Unteranspruch 3 berücksichtigt den Fall, daß die Periodendauer des Abtasttaktes kürzer als die des Übertragungstaktes ist. Wenn sich vorzugsweise die Takte jedoch nur geringfügig unterscheiden, wird auch ein vereinzelt verworfenes Datenwort nicht zu einem schwerwiegenden Fehler im übertragenen Signal führen.

Gemäß Unteranspruch 4 werden im Zwischenspeicher maximal zwei aufeinanderfolgende Datenworte gespeichert. Der Zwischenspeicher muß demnach nur zwei datenwortorientierte Speicherplätze aufweisen, die für das erfindungsgemäße Verfahren ausreichen. Zwar wäre nach dem erfindungsgemäßen Verfahren grundsätzlich auch nur ein datenwortorientierter Speicherplatz zum Zwischenspeichern nur eines Datenwortes ausreichend. Dies könnte jedoch zu einem möglichen Konflikt aufgrund des asynchronen Systems im Falle eines nahezu gleichzeitigen Einlese- und Auslesevorgangs führen.

Obwohl andererseits das erfindungsgemäße Verfahren grundsätzlich auch Zwischenspeicher mit einer Vielzahl von datenwortorientierten Speicherplätzen zuläßt, können durch die erfindungsgemäße Weiterbildung Kosten bei der Auswahl des Zwischenspeichers eingespart werden.

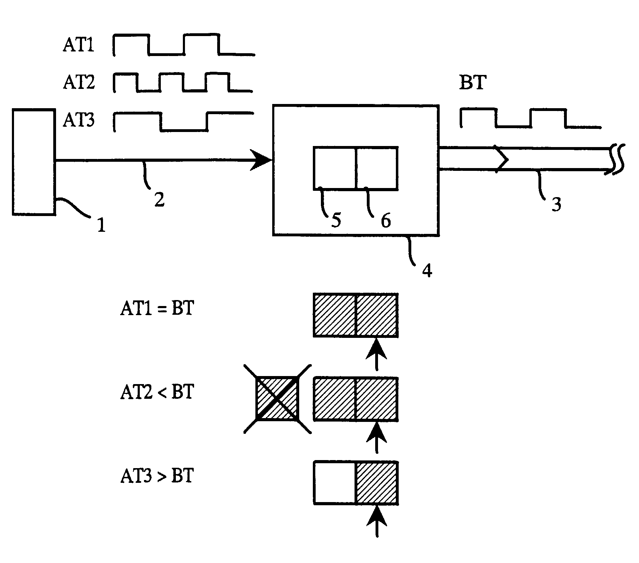

In der Zeichnung ist ein Ausführungsbeispiel der Erfindung dargestellt. Sie zeigt eine Vorrichtung zur Durchführung des erfindungsgemäßen Verfahrens mit drei unterschiedlichen Abtasttakten als Beispiele.

Eine Audiosignalquelle 1, z. B. ein CD-Laufwerk, in einem hier nicht dargestellten Kraftfahrzeug ist über eine elektrische Verbindung 2 mit einem Zwischenspeicher 4 verbunden. Am Zwischenspeicher 4 ist ein Datenbus 3, insbesondere zur Übertragung von digitalisierten Audiosignalen zu einem hier nicht dargestellten Empfänger, angeschlossen. Der Empfänger führt eine Digital-/ Analogwandlung des übertragenen Audiosignals, z. B. zur Ausgabe des Audiosignals über Lautsprecher in den Fahrgastraum, durch. Der Datenbus 3 kann auch noch weitere Informationen übertragen.

In der Audiosignalquelle 1 erfolgt die digitale Darstellung der Audiosignale durch die Abtastung der analogen Audiosignale mit einem bestimmten Abtasttakt und durch anschließende Analog-/ Digitalwandlung mit einer vorgegebenen Auflösung. Das Ausführungsbeispiel unterscheidet zwischen drei unterschiedlichen Abtasttakten mit der jeweiligen Periodendauer AT1 (z.B. aus 41 kHz => 24 $\mu$s), AT2 (z.B. aus 48 kHz => 20 $\mu$s) oder AT3 (z.B. aus 38 kHz => 26 $\mu$s) Die so erhaltenen digitalen Abtastwerte (sog. Samples) des Audiosignals werden in Form von Datenworten über die elektrische Verbindung 2 von der Audiosignalquelle 1 an den Zwischenspeicher 4 weitergeleitet.

Der Zwischenspeicher 4 weist zwei datenwortorientierte Speicherplätze 5 und 6 auf. Die Datenworte werden asynchron in derselben Reihenfolge, in der sie eingelesen werden, durch die beiden Speicherplätze 5 und 6 zum Datenbus 3 weitergegeben. Das zuerst eingelesene Datenwort wird auch wieder zuerst ausgelesen. Dabei ist der Auslesetakt bei der Übergabe eines Datenwortes vom Zwischenspeicher 4 an den Datenbus 3 unabhängig vom Einlesetakt und gleich dem Übertragungstakt BT (z.B. aus 41 kHz => 24 $\mu$s) des Datenbusses 3. Dagegen ist der Einlesetakt gleich dem Abtasttakt AT1, AT2 oder AT3. Im folgenden werden die drei möglichen Fälle unterschieden:

1.

$$\text{AT1 } (24\ \mu s) = \text{BT } (24\ \mu s);$$

d. h. der Abtasttakt ist gleich dem Übertragungstakt
2.

$$\text{AT2 } (20\ \mu s) < \text{BT } (24\ \mu s);$$

d. h. der Übertragungstakt ist langsamer als der Abtasttakt bzw. die Periodendauer des Übertragungstaktes ist länger als die des Abtasttaktes
3.

$$\text{AT3 } (26\ \mu s) > \text{BT } (24\ \mu s);$$

d. h. der Übertragungstakt ist schneller als der Abtasttakt bzw. die Periodendauer des Übertragungstaktes ist kürzer als die des Abtasttaktes

Im ersten Fall findet lediglich eine Synchronisation in Form einer Phasenverschiebung statt, während im zweiten und dritten Fall sowohl eine Abtastratenwandlung als auch eine Synchronisation stattfinden.

1. Fall:

Wird ein Datenwort (schraffierte Fläche) über die elektrische Verbindung 2 von der Audiosignalquelle 1 an den zunächst leeren Zwischenspeicher 4 weitergegeben, wird dieses Datenwort beispielsweise auf dem Speicherplatz 6 abgespeichert. Folgt ein zweites Datenwort, bevor das erste ausgelesen wird, wird das zweite Datenwort auf dem Speicherplatz 5 abgelegt. Im vorliegenden Fall tritt dies jedoch nur dann auf, wenn ein Einlesevorgang und ein Auslesevorgang nahezu gleichzeitig stattfinden. Wäre dies ausgeschlossen, würde für das erfindungsgemäße Verfahren auch ein Zwischenspeicher 4 mit nur einem Speicherplatz ausreichen.

Das auf dem Speicherplatz 6 abgespeicherte erste Datenwort wird mit dem Auslesetakt, der dem Übertragungstakt BT entspricht, ausgelesen (Pfeil) und auf den Datenbus 3 ausgegeben. Das auf dem Speicherplatz 5 abgelegte Datenwort rückt anschließend auf Speicherplatz 6 vor. Der Einlesetakt ist unabhängig vom Auslesetakt gleich dem Abtasttakt AT1.

Da die Periodendauer des Einlesetakts und die des Auslesetakts gleich sind, werden die Datenworte lediglich mit einer Zeitverzögerung bzw. Phasenverschiebung von der Audioquelle 1 auf den Datenbus 3 ohne Fehler übertragen.

2. Fall:

Findet der Digitalisiervorgang des Audiosignals in der Audiosignalquelle 1 mit dem Abtasttakt AT2 statt, ist der Einlesetakt des Zwischenspeichers 4, der gleich dem Abtasttakt AT2 ist, schneller als der Auslesetakt des Zwischenspeichers 4, der gleich dem Übertragungstakt BT des Datenbusses 3 ist. Somit können die Speicherplätze 5 und 6 mit Datenwörtern (schraffierte Flächen) belegt sein, die noch nicht ausgelesen wurden, wenn ein drittes Datenwort bereits nachfolgt, so daß das nachfolgende dritte Datenwort vom Zwischenspeicher 4 verworfen wird (durchgestrichene Fläche). Da sich jedoch der Abtasttakt AT2 vom Übertragungstakt BT (bzw. der Einlesetakt vom Auslesetakt) entsprechend dem genannten Anwendungsfall nur geringfügig unterscheidet, findet ein Verwerfen eines Datenwortes lediglich ausnahmsweise und nur vereinzelt statt, so daß das menschliche Gehör keinen Fehler durch überlagerte Störfrequenzen erfaßt.

3. Fall:

Ist der Abtasttakt AT3 beim Digitalisiervorgang des Audiosignals langsamer als der Übertragungstakt BT des Datenbusses 3 bzw. ist die Periodendauer des Abtasttaktes AT3 länger als die des Übertragungstaktes BT, kann der Fall eintreten, daß bereits alle Datenworte im Zwischenspeicher 4 ausgelesen wurden, bevor ein neues Datenwort eingelesen wurde. Wird beispielsweise ein erstes Datenwort vom Zwischenspeicher 4 eingelesen und auf dem Speicherplatz 6 abgelegt, wird durch den gegenüber dem Einlesetakt schnelleren Auslesetakt, der gleich dem Übertragungstakt BT ist, das Datenwort ausgelesen, bevor ein neues Datenwort, z. B. auf den Speicherplatz 5, nachgerückt ist. In diesem Fall wird das Datenwort auf dem Speicherplatz 6, das bereits ausgelesen wurde, erneut ausgegeben, bis ein neues Datenwort in den Zwischenspeicher 4 eingelesen wurde. Sobald ein neues Datenwort eingelesen wurde, wird dieses wiederum solange ausgelesen, bis ein weiteres neues Datenwort eingelesen wurde. In diesem Fall werden durch das erfindungsgemäße Verfahren unerhebliche Fehler absichtlich erzeugt, um erhebliche Fehler zu verhindern.

Durch dieses erfindungsgemäße Ausführungsbeispiel wird ein einfaches und kostengünstiges Verfahren zur Übertragung von digitalisierten Audiosignalen auf einen Datenbus in Kraftfahrzeugen geschaffen.

**Patentansprüche**

1.  Verfahren zur Übertragung von digitalisierten Analogsignalen auf einen Datenbus, wobei der Abtasttakt beim Digitalisiervorgang des Analogsignals entkoppelt vom Übertragungstakt des Datenbusses ist, dadurch gekennzeichnet, daß die nach einer Abtastung erhaltenen digitalen Abtastwerte (Samples) des Analogsignals in Form von Datenworten nacheinander über einen Zwischenspeicher (4; 5, 6) nach dem asynchronen FIFO-Prinzip auf den Datenbus (3) ausgegeben werden, und daß der Einlesetakt des Zwischenspeichers (4; 5, 6) dem Abtasttakt (AT1; AT2; AT3) des Digitalisiervorgangs und der Auslesetakt des Zwischenspeichers (4; 5, 6) dem Übertragungstakt (BT) des Datenbusses (3) angepaßt werden.

2.  Verfahren nach Patentanspruch 1, dadurch gekennzeichnet, daß im Falle eines gegenüber dem Abtasttakt (AT3) schnelleren Übertragungstaktes (BT) bei ausgelesenem Zwischenspeicher (4; 5, 6), das zuletzt aus dem Zwischenspeicher ausgelesene Datenwort solange erneut auf den Datenbus (3) ausgegeben wird, bis ein neues Datenwort in den Zwischenspeicher (4; 5, 6) eingelesen wird.

3.  Verfahren nach Patentanspruch 1 oder 2, dadurch gekennzeichnet, daß im Falle eines gegenüber dem Abtasttakt (AT2) langsameren Übertragungstaktes (BT) bei vollem Zwischenspeicher (4; 5, 6) die nachfolgenden Datenworte verworfen werden, bis ein neues Datenwort in den Zwischenspeicher (4; 5, 6) eingelesen werden kann.

4.  Verfahren nach einem der Patentansprüche 1 bis 3, dadurch gekennzeichnet, daß im Zwischenspeicher (4; 5, 6) maximal zwei Datenworte gespeichert werden.

5.  Anwendung des Verfahrens nach einem der Patentansprüche 1 bis 4 auf die Übertragung von digitalisierten Audiosignalen auf einen Datenbus in Kraftfahrzeugen.

AT1

AT2

AT3

BT

AT1 = BT

AT2 < BT

AT3 > BT